# EUROPEAN PATENT SPECIFICATION

(11) **EP 4 287 361 B1**
(45) Date of publication and mention of the grant of the patent: **22.04.2026**
(21) Application number: 22878931.9
(22) Date of filing: 06.10.2022
(51) Int. Cl.: H01M 10/6551, H01M 10/613, H01M 10/625, H01M 50/211, H01M 50/249, H01M 10/647, H01M 50/209

(54) **BATTERY MODULE**
BATTERIEMODUL
MODULE DE BATTERIE

(30) Priority: 06.10.2021 KR 20210132745
(43) Date of publication of application: 06.12.2023
(73) Proprietor: LG Energy Solution, Ltd., Seoul 07335 (KR)
(72) Inventor: JANG, Sung-Hwan, Daejeon 34122 (KR); SEONG, Jun-Yeob, Daejeon 34122 (KR); PARK, Myung-Ki, Daejeon 34122 (KR)
(74) Representative: Goddar, Heinz J.
(86) International application number: PCT/KR2022/015061
(87) International publication number: WO 2023/059110

(56) References cited:
- WO-A1-2023/121318
- JP-A- 2008 251 306
- JP-A- 2016 122 543
- JP-A- 2019 139 879
- KR-A- 20060 102 852
- KR-A- 20060 102 852
- KR-A- 20130 086 485
- KR-A- 20200 075 688
- KR-A- 20210 099 424

## Description

### TECHNICAL FIELD

The present disclosure relates to a battery, and more particularly, to a battery module having improved heat dissipation performance and a battery pack and a vehicle including the battery module.

### BACKGROUND ART

As the demand for portable electronic products such as laptops, video cameras, and mobile phones has recently rapidly increased and the commercialization of robots, electric vehicles, etc. has begun in earnest, research on high-performance secondary batteries capable of repeated charging/discharging has been actively conducted.

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus, have advantages of free charge/discharge, very low self-discharge rate, and high energy density.

A lithium secondary battery mainly uses a lithium-based oxide and a carbon material as a positive electrode active material and a negative electrode active material, respectively. A lithium secondary battery includes an electrode assembly in which a positive electrode plate and a negative electrode plate coated with a positive electrode active material and a negative electrode active material are located with a separator therebetween, and a casing in which the electrode assembly is air-tightly accommodated with an electrolyte, that is, a battery case.

In general, according to a shape of a casing, lithium secondary batteries may be classified into can-type secondary batteries in which an electrode assembly is received in a metal can, and pouch-type secondary batteries in which an electrode assembly is received in a pouch of an aluminum laminate sheet.

Recently, secondary batteries have been widely used for driving or energy storage not only in small devices such as portable electronic devices but also in medium and large-sized devices such as electric vehicles and energy storage systems (ESSs). A plurality of secondary batteries may be electrically connected to each other and accommodated together in a module case to constitute one battery module. A plurality of battery modules may be connected to each other to constitute one battery pack.

When secondary batteries used in a battery module or a battery pack are used in an environment higher than an appropriate temperature, there is a risk of explosion or firing in a severe case. Furthermore, when a battery module is configured using a plurality of secondary batteries, heat from the plurality of secondary batteries is added up in a narrow space, and thus, a temperature of the battery module may rise more rapidly and severely. Also, because a battery module used in a vehicle or an energy storage system (ESS) may be located outdoors, heat such as direct sunlight or high temperature may be applied from the outside. Accordingly, in a battery module, temperature control, in particularly, cooling a battery pack when a temperature of the battery pack rises, is very important.

Also, some of battery cells (secondary batteries) provided in a battery module may generate heat due to an abnormal situation. Such heat may continuously increase a temperature of the batteries, and when the temperature exceeds a certain critical temperature, thermal runaway may occur. Also, the thermal runaway may propagate to other battery cells or other battery modules. When such heat or thermal runaway is not appropriately controlled, the safety of a battery module or a battery pack, furthermore, a device equipped with the battery, such as a vehicle or an energy storage system, or a user using the device is threatened.

Moreover, recently, although the capacity or output of a battery has increased, the demand for reducing a charging time has further increased. Accordingly, fast charging technology for a battery is widely used, but there is a problem in that heat generation of the battery is further increased during fast charging. Accordingly, there is a need to appropriately control heat generation of a battery even in a fast charging mode.

JP 2016 122543 A shows a battery module according to the preamble of claim 1.

### DISCLOSURE

### Technical Problem

The present disclosure is designed to solve the problems of the related art, and therefore the present disclosure is directed to providing a battery module having improved heat dissipation performance to appropriately control heat of the battery module, and a battery pack and a vehicle including the battery module.

However, the technical purpose to be solved by the present disclosure is not limited to the above, and other objects not mentioned herein will be clearly understood by one of ordinary skill in the art from the following disclosure.

### Technical Solution

According to the invention, there is provided a battery module including a cell assembly including a plurality of battery cells stacked in at least one direction, and a module case having an inner space in which the cell assembly is accommodated, the module case including an uneven portion formed on at least a part of an inner surface of the module case in a direction not parallel to a stacking direction of the plurality of battery cells.

The plurality of battery cells are stacked in a left-right direction, and the uneven portion of the module case is formed in a front-back direction.

The battery module may further include a thermal resin located between the cell assembly and the inner surface of the module case on which the uneven portion is formed.

The module case includes a top plate, a base plate, and a side plate, and the uneven portion is formed on the base plate.

The uneven portion may be additionally formed on at least one of the top plate and the side plate.

The module case may further include an uneven portion formed on at least a part of an outer surface.

The module case may be configured so that a surface area of the uneven portion changes from an inside to an outside.

The module case may include an uneven portion formed on each of a top plate and a base plate, and the uneven portion formed on the top plate and the uneven portion formed on the base plate may have different shapes.

According to another aspect of the present disclosure, there is provided a battery pack including the battery module according to the present disclosure.

According to another aspect of the present disclosure, there is provided a vehicle including the battery module according to the present disclosure.

### Advantageous Effects

According to an aspect of the present disclosure, a battery module having improved heat dissipation and cooling performance may be provided.

Accordingly, even when heat is generated in the battery module, the heat may be rapidly discharged to the outside, and thus, heat accumulation in the battery module may be suppressed.

Furthermore, more heat may be released from a battery cell during fast charging. According to the aspect of the present disclosure, heat dissipation performance through a module case (module frame) may be improved. Accordingly, even when fast charging is performed on the battery module, a temperature of the battery module may not rapidly rise and heat management may be appropriately performed.

Also, according to an embodiment of the present disclosure, a thermal resin may be located between the module case and a cell assembly, and in this case, the amount of thermal resin used may be reduced.

Also, according to the embodiment of the present disclosure, a contact area between the cell assembly and the thermal resin may increase. Accordingly, because heat dissipation performance may be improved and the amount of thermal resin used may be reduced, the battery module having reduced cost and excellent economic efficiency may be provided.

The present disclosure may have various other effects, which will be described in each embodiment, or descriptions of effects that may be easily inferred by one of ordinary skill in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a combined perspective view schematically illustrating elements of a battery module according to an embodiment of the present disclosure.
FIG. 2 is an exploded perspective view illustrating the battery module of FIG. 1.
FIG. 3 is a cross-sectional view schematically illustrating some elements of the battery module according to an embodiment of the present disclosure.
FIG. 4 is a cross-sectional view schematically illustrating some elements of a battery module according to another embodiment of the present disclosure.
FIG. 5 is a cross-sectional view schematically illustrating elements of a battery module according to still another embodiment of the present disclosure.
FIG. 6 is a cross-sectional view schematically illustrating some elements of a battery module according to still another embodiment of the present disclosure.
FIG. 7 is a cross-sectional view schematically illustrating some elements of a battery module according to still another embodiment of the present disclosure.
FIG. 8 is a cross-sectional view schematically illustrating some elements of a battery module according to another embodiment of the present disclosure.
FIG. 9 is an exploded perspective view schematically illustrating some elements of a battery module according to still another embodiment of the present disclosure.
FIGS. 10 and 11 are an exploded perspective view and a cross-sectional view schematically illustrating some elements of a battery module according to still another embodiment of the present disclosure.
FIG. 12 is a cross-sectional view schematically illustrating some elements of a battery module according to still another embodiment of the present disclosure.

### BEST MODE

Hereinafter, preferred embodiments will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

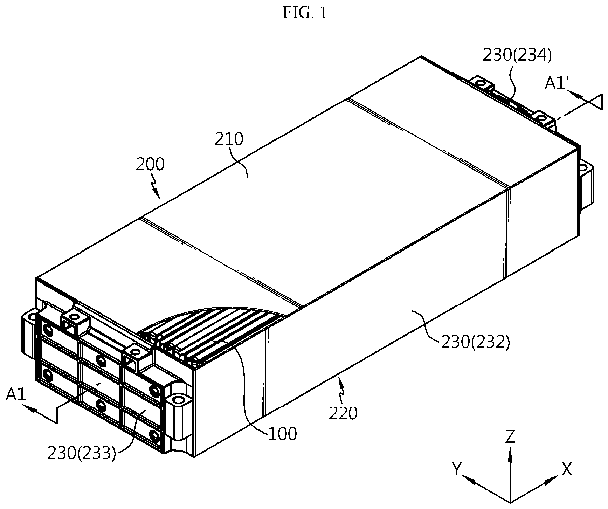

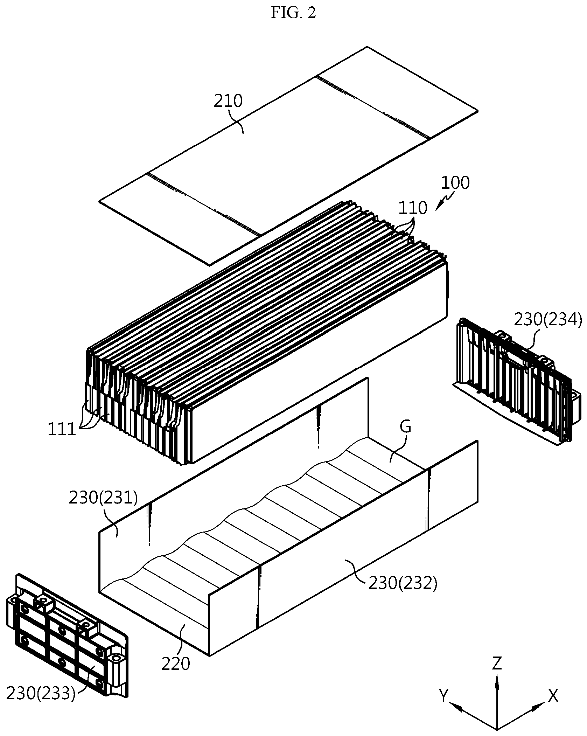

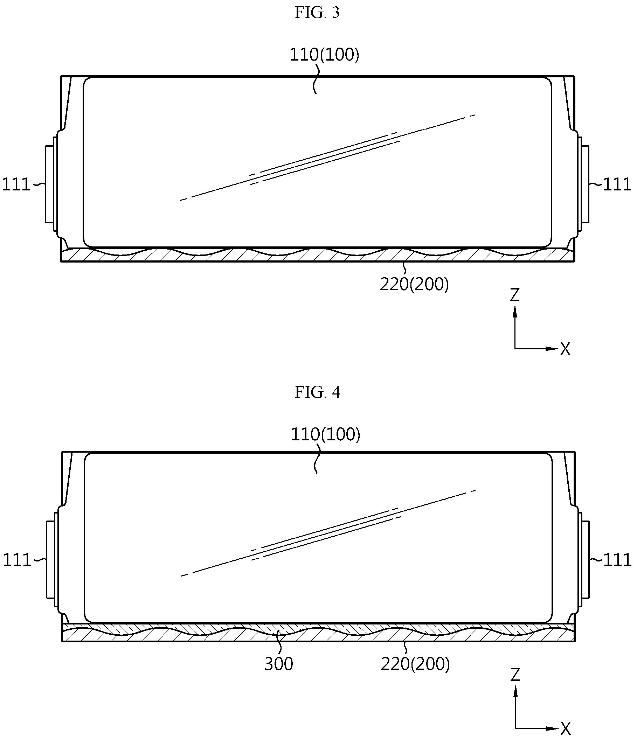

FIG. 1 is a combined perspective view schematically illustrating elements of a battery module according to an embodiment of the present disclosure. FIG. 2 is an exploded perspective view illustrating the battery module of FIG. 1. Also, FIG. 3 is a cross-sectional view schematically illustrating some elements of the battery module according to an embodiment of the present disclosure. In particular, FIG. 3 may be a cross-sectional view, taken along line A1-A1' of FIG. 1, illustrating some elements.

Referring to FIGS. 1 to 3, a battery module according to the present disclosure includes a cell assembly 100 and a module case 200.

The cell assembly 100 may include one or more battery cells 110, in particular, a plurality of battery cells 110. Each battery cell 110 may refer to a secondary battery. The secondary battery may include an electrode assembly, an electrolyte, and a battery case. In particular, the battery cell 110 provided in the cell assembly 100 may be a pouch-type secondary battery. However, another type of secondary battery, for example, a cylindrical battery or a prismatic battery, may be applied to the cell assembly 100.

The plurality of battery cells 110 may be stacked in at least one direction to form the cell assembly 100. For example, the plurality of secondary batteries may be stacked by being arranged in parallel in a horizontal direction (Y-axis direction) while erected in a vertical direction (Z-axis direction). In this case, each battery cell 110 may be configured so that a wide receiving unit surface is located on a left side and a right side. Also, each battery cell 110 may include an electrode lead 111, and the electrode lead 111 may be located at both ends or one end of each battery cell 110. A secondary battery in which the electrode lead 111 protrudes in both directions may be referred to as a bidirectional cell, and a secondary battery in which the electrode lead 111 protrudes in one direction may be referred to as a unidirectional cell. In a configuration of FIGS. 1 to 3, a bidirectional cell in which the electrode leads 111 are located on a front side and a rear side of the battery cell 110 is illustrated. However, the present disclosure is not limited by a specific type or shape of a secondary battery, and various types of secondary batteries known at the time of filing the present application may be applied to the cell assembly 100.

The module case 200 may have an inner space in which the cell assembly 100 is accommodated. For example, the module case 200 may include a plurality of plates (frames), and the inner space may be defined in a state where the plurality of plates are combined with each other. The cell assembly 100 may be accommodated in the inner space defined by the plates of the module case 200. Accordingly, the module case 200 may cover the outside of the cell assembly 100, in various directions such as up, down, front, back, left and right directions.

The module case 200 may include an uneven portion formed on at least a part of an inner surface of the module case 200. For example, an uneven portion G of FIG. 2 may be formed on the whole or a part of a bottom portion of the module case 200 facing the bottom of the cell assembly 100. The uneven portion G may include a convex portion convexly formed in an inward direction of the battery module and a concave portion concavely formed in outward direction of the battery module. That is, the uneven portion G may be formed by alternately forming the convex portion and the concave portion. Furthermore, the uneven portion G in the module case 200 may be formed in a wave shape as shown in FIG. 3. That is, in the uneven portion G, the convex portion and the concave portion may be formed in curved shapes, may be alternately located, and may be continuously formed.

In particular, a direction of the uneven portion may be a direction not parallel to a stacking direction of the battery cells 110. For example, referring to the configuration of FIGS. 2 and 3, while the stacking direction of the battery cells 110 is the Y-axis direction, the uneven portion of the module case 200 may not be formed in the Y-axis direction but may be formed in another direction, that is, a direction inclined at a certain angle from the Y-axis direction.

According to this embodiment of the present disclosure, due to the uneven portion formed on the inner surface of the module case 200, heat dissipation efficiency of the cell assembly 100 through the module case 200 may be improved. That is, according to the embodiment, because an inner surface area of the module case 200 at a portion where the uneven portion is formed is increased, heat transfer performance between the cell assembly 100 and the module case 200 may be improved.

Furthermore, in the battery module according to the present disclosure, because the uneven portion of the module case 200 is formed in a direction different from the stacking direction of the battery cells 110, each battery cell 110 may contact a plurality of uneven portions. For example, referring to FIG. 3, the bottom of one battery cell 110 may face a plurality of convex portion and a plurality of concave portions of the module case 200.

According to this aspect of the aspect of the present disclosure, heat dissipation performance of each battery cell 110 may be further improved. That is, because each battery cell 110 included in the cell assembly 100 contacts a plurality of convex portions and a plurality of concave portions of the module case 200, heat dissipation efficiency of each battery cell 110 through the module case 200 may be further improved.

In particular, referring to FIG. 2, in the battery module according to the present disclosure, a plurality of battery cells 110 is stacked in a left-right direction (Y-axis direction). In this case, the uneven portion of the module case 200 is formed in a front-back direction (X-axis direction). In more detail, referring to FIG. 3, the uneven portion of the module case 200 is configured so that a convex portion and a concave portion are repeatedly arranged in the X-axis direction that is the front-back direction. In this embodiment, a direction of the uneven portion of the module case 200 may be a direction perpendicular to the stacking direction of the plurality of battery cells 110.

According to this embodiment of the present disclosure, each battery cell 110 may face a large number of uneven portions. Accordingly, heat dissipation performance through the module case 200, in particular, heat dissipation performance through a portion of the module case 200 where the uneven portion is formed, may be further improved.

FIG. 4 is a cross-sectional view schematically illustrating some elements of a battery module according to another embodiment of the present disclosure. When various embodiments of the present disclosure including the present embodiment are described, for parts to which descriptions of the above embodiments are equally or similarly applicable, descriptions thereof are omitted, and different parts are mainly described.

Referring to FIG. 4, the battery module according to the present disclosure may further include a thermal resin 300. The thermal resin 300 may be located between the module case 200 and the cell assembly 100. In particular, as descried above, an uneven portion may be formed on the module case 200. The thermal resin 300 may be located on an inner surface of a portion of the module case 200 on which the uneven portion is formed. Accordingly, the thermal resin 300 may be located at least between the cell assembly 100 and the portion of the module case 200 on which the uneven portion is formed.

The thermal resin 300 for transferring heat between the battery cell 110 and the module case 200 may include any of various types of thermal conductive materials known at the time of filing the present application. That is, the battery module according to the present disclosure is not limited by a specific type of the thermal resin 300. In particular, the thermal resin 300 in a fluid state may be injected or applied between the battery cell 110 and the module case 200, and may be fixed at a corresponding position through curing. Also, the thermal resin 300 may include an adhesive material. For example, the thermal resin 300 may be a thermally conductive adhesive.

When the thermal resin 300 is located between the module case 200 and the cell assembly 100, heat dissipation efficiency of the cell assembly 100 through the module case 200 may be improved. In addition, in the battery module according to the present disclosure, the thermal resin 300 may be located on the portion on which the uneven portion is formed, and in this case, the amount of the thermal resin 300 used may be reduced. In particular, because a smaller amount of the thermal resin 300 is located on a portion of the uneven portion where a convex portion is formed, the amount of the thermal resin 300 used may be reduced. Hence, according to an aspect of the present disclosure, a material cost may be reduced and a manufacturing cost of the battery module may be reduced.

The module case 200 includes a top plate 210, a base plate 220, and a side plate 230, as shown in FIG. 2. An inner space of the module case 200 may be defined by these elements, that is, the top plate 210, the base plate 220, and the side plate 230 so that the cell assembly 100 is accommodated in the inner space. The top plate 210 may be located on the top of the module case 200, the base plate 220 may be spaced apart from the bottom of the top plate 210 by a certain distance. Also, the side plate 230 may be located between the top plate 210 and the base plate 220 so that an upper end and a lower end are respectively connected to the top plate 210 and the base plate 220.

The top plate 210, the base plate 220, and/or the side plate 230 may have a thin sheet shape, that is, a plate shape, but may have a polyhedral shape with a certain thickness or more, for example, a rectangular parallelepiped shape. Furthermore, the side plate 230 may include a left plate 231, a right plate 232, a front plate 233, and a rear plate 234. All or some of the top plate 210, the base plate 220, and/or the side plate 230 may be formed of a metal material. Also, at least some of the top plate 210, the base plate 220, and the side plate 230 may be formed of a plastic material. For example, the left plate 231, the right plate 232, the top plate 210, and the base plate 220 may be formed of a steel material. The front plate 233 and the rear plate 234 may be formed of a plastic material.

At least some of the top plate 210, the base plate 220, and the side plate 230 may be integrally formed with each other. For example, as shown in FIG. 2, the left plate 231 and the right plate 232 from among four side plates 230 may be integrally formed with the base plate 220. In this case, the left plate 231 and the right plate 232 and the base plate 220 which are integrally formed with each other may be referred to as a U-frame due to their shape. In this case, the front plate 233 and the rear plate 234 that are end plates may be respectively coupled to opening portions of a front end and a rear end of the U-frame. The top plate 210 may be coupled to an opening portion of an upper end of the U-frame.

However, the module case 200 may be configured in any of various other shapes. For example, the base plate 220 and the four side plates 230 may be integrally formed to constitute a lower case having a box shape. In this case, the top plate 210 may be coupled to an opening portion of an upper end of the lower case having the box shape. In another example, the base plate 220, the left plate 231, the right plate 232, and the top plate 210 may be integrally formed to constitute a case having a pipe shape. In this case, the case having the pipe shape may be referred to as a mono frame. Alternatively, the top plate 210, the base plate 220, the left plate 231, the right plate 232, the front plate 233, and the rear plate 234 may be separately manufactured, and then, corner portions of the top plate 210, the base plate 220, the left plate 231, the right plate 232, the front plate 233, and the rear plate 234 may be coupled to each other in an assembly process.

Various coupling methods may be applied to a configuration in which the top plate 210, the base plate 220, the left plate 231, the right plate 232, the front plate 233, and the rear plate 234 are not integrally manufactured but are coupled in an assembly process of the battery module. For example, the top late 210, the front plate 233, and the rear plate 234 may be coupled to the U-frame by using laser welding or ultrasonic welding. Alternatively, elements of the module case 200 may be coupled to each other by using bolt fastening.

In the configuration of the module case 200, the uneven portion is formed on the base plate 220. That is, as shown in FIGS. 2 and 3, the uneven portion may be formed on a top surface of the base plate 220 on which the cell assembly 100 is seated.

A portion of the module case 200 that may be closest to the cell assembly 100 is the base plate 220. Accordingly, when the uneven portion is formed on an inner surface of the base plate 220, a heat dissipation effect of the cell assembly 100 through the uneven portion may be further improved.

Furthermore, this embodiment of the present disclosure may be better when applied to a device in which a heat dissipation path is located at the bottom of the battery module. For example, when a cooling component, for example, a refrigerant pipe, is provided at the bottom of the battery module, a better heat dissipation effect may be obtained when the uneven portion is formed on the inner surface of the base plate 220.

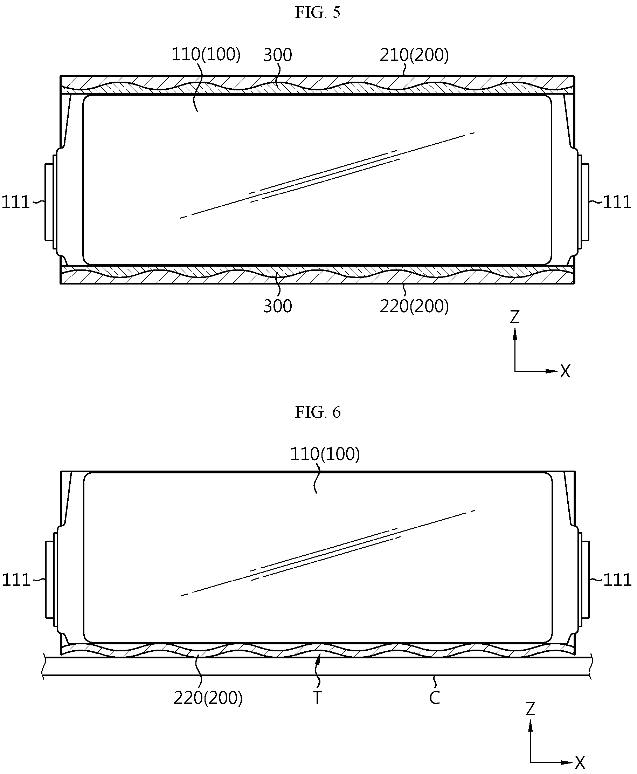

Also, in the configuration of the module case 200, the uneven portion may be formed on a plurality of different side surfaces of the module case 200. Also, the uneven portion may be additionally formed on at least one of the top plate 210 and the side plate 230, in addition to the base plate 220, which will be described in more detail with reference to FIG. 5.

FIG. 5 is a cross-sectional view schematically illustrating elements of a battery module according to still another embodiment of the present disclosure. Furthermore, FIG. 5 may be a cross-sectional view, taken along line A1-A1' of FIG. 1, illustrating some elements. In particular, in FIG. 5, the front plate 233 and the rear plate 234 are not shown.

As shown in FIG. 5, uneven portions may be formed on both a top surface of the base plate 220 and a bottom surface of the top plate 210. In this case, one battery cell 110 may contact a plurality of uneven portions at the bottom and the top.

According to this embodiment of the present disclosure, heat dissipation performance of a plurality of side surfaces, in particular, an upper portion and a lower portion, of the cell assembly 100 may be improved. In particular, in a configuration in which a plurality of pouch-type cells are arranged in parallel in the horizontal direction as in the above embodiment, a dual cooling method in which cooling is performed at both the top and the bottom of the battery module may be used. Furthermore, as requirements for fast charging have recently increased, the probability of using a dual cooling method may further increase. In this case, when the uneven portions are formed on both the base plate 220 and the top plate 210 as in the above embodiment, cooling performance of the dual cooling method may be further improved.

FIG. 6 is a cross-sectional view schematically illustrating some elements of a battery module according to still another embodiment of the present disclosure. For example, FIG. 6 may be a modification of the configuration of FIG. 3.

Referring to FIG. 6, an uneven portion may be formed on at least a part of an outer surface of the module case 200. In more detail, in a configuration of FIG. 6, uneven portion may be formed on both a top surface and a bottom surface of the base plate 220. In this case, uneven portions may be formed not only on an inner surface but also an outer surface of the module case 200, that is, the base plate 220. In this case, the area of the inner surface and the area of the outer surface of the base plate 220 may increase.

According to this embodiment, when heat is generated in the cell assembly 100, more heat may be absorbed through the uneven portion formed on the inner surface of the module case 200. In addition, more heat may be released to the outside through the uneven portion formed on the outer surface of the module case 200. Furthermore, a cooling component C may be located outside the battery module as shown in FIG. 6. The cooling component may be a cooling pipe provided in a battery pack, or a device including the battery pack, for example, a vehicle. In this case, heat of the cell assembly 100 may be rapidly and smoothly discharged to the cooling component C through the uneven portions formed on both surfaces of the base plate 220, that is, the module case 200.

Also, in the embodiment, a thermal interface material T may be located between the cooling component C and the outer surface of the base plate 220 as shown in FIG. 6. In particular, the thermal interface material may be filled in the uneven portion formed on the outer surface of the base plate 220. In this case, a contact area between the thermal interface material and the base plate 220 may increase, thereby further improving cooling efficiency of the base plate 220.

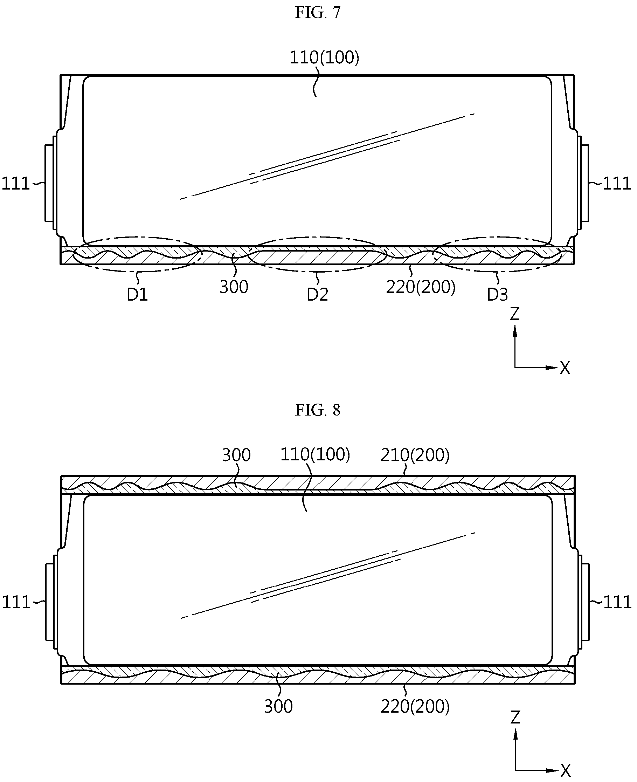

The uneven portion of the module case 200 may not be entirely uniformly formed but may be formed to have different shapes according to parts, which will be described in more detail with reference to FIG. 7.

FIG. 7 is a cross-sectional view schematically illustrating some elements of a battery module according to still another embodiment of the present disclosure. For example, FIG. 7 may be still another modification of the configuration of FIG. 3.

Referring to FIG. 7, the module case 200 may be configured so that a surface area of an uneven portion changes from the inside to the outside. For example, in a state where the cell assembly 100 and the base plate 220 are located as shown in FIG. 7, a central portion D2 may be an inner portion and edge portions D1 and D3 may be outer portions. In this case, at least two of the portions D1, D2 and D3 may be configured so that an uneven portion has different shapes, in particular, different surface areas. In order to make surface areas of an uneven portion different from each other, a depth of the uneven portion may be increased or a distance between convex portions of the uneven portion may be reduced. For example, when an uneven portion is formed in a wave shape, a surface area of the uneven portion may be increased by increasing an amplitude of the wave or reducing a wavelength of the wave.

In more detail, referring to a configuration of the base plate 220 of FIG. 7, it is found that a surface area of an uneven portion changes from the inside to the outside, that is, from D2 to D1 or D3.

In this embodiment of the present disclosure, more appropriate heat dissipation performance may be ensured according to a difference in a shape of the uneven portion for each part of the base plate 220, that is, the module case 200. Furthermore, the amount of heat discharged from the cell assembly 100 may vary according to its location. Accordingly, when there is a change in a shape of the uneven portion of the module case 200 according to each part as in the embodiment, a difference in the amount of discharged heat may be adaptively dealt with. Hence, in this case, more efficient and uniform heat dissipation may be achieved.

In particular, the battery cell 110 may discharge heat in a charging/discharging process, and there may be a difference in the amount of discharged heat for each part. In a representative example, more heat may be generated and discharged at a portion of the battery cell 110 where the electrode lead 111 is located. In this case, in the module case 200, an uneven portion of an outer portion close to the electrode lead 111 may have a larger surface area than other portions. For example, as shown in FIG. 7, when the base plate 220 is located under the battery cell 110 including the electrode leads 111 on a front side and a rear side, outer portions, that is, the edge portions D1 and D3 close to the electrode lead 111, may have deeper and more uneven portions than the central portion D2. In particular, the central portion D2 may have almost no uneven portion and may have only a convex portion.

According to this embodiment of the present disclosure, a heat absorption amount or a heat absorption rate of a side surface of the module case 200 where the electrode lead 111 is located may be higher than that in other portions. Accordingly, even when more heat is discharged from a portion of the battery cell 110 on which the electrode lead 111 is located, the module case 200 may also absorb more heat, thereby making an overall temperature of the battery cell 110 uniform.

Also, according to the embodiment, the amount of the thermal resin 300 in the central portion D2 may be reduced. That is, in the central portion D2, because a concave portion is hardly formed and only a convex portion is mainly formed widely, an interval between the battery cell 110 and the base plate 220 may be zero or reduced. Accordingly, the amount of the thermal resin 300 located between the base plate 220 and the battery cell 110 in the central portion may be reduced.

FIG. 8 is a cross-sectional view schematically illustrating some elements of a battery module according to another embodiment of the present disclosure. In particular, FIG. 8 may be a modification of the configuration of FIG. 5.

Referring to FIG. 8, in the module case 200, uneven portions may be respectively formed on the top plate 210 and the base plate 220. In this case, the uneven portion formed on the top plate 210 and the uneven portion formed on the base plate 220 may have different shapes. In more detail, the uneven portion on the base plate 220 may be uniformly formed in the horizontal direction (front-back direction) that is the X-axis direction. In contrast, the uneven portion on the top plate 210 may be non-uniformly formed in the horizontal direction. In particular, the uneven portion formed on the top plate 210 may be formed so that a surface area of the uneven portion of an outer portion is greater than a surface area of the uneven portion of an inner portion, like in the base plate 220 of FIG. 7. That is, in FIG. 8, a depth of the uneven portion on an edge portion of the top plate 210 may be greater than a depth of the uneven portion on a central portion. Also, more uneven portions may be formed on the edge portion of the top plate 210 than on the central portion based on the same horizontal distance. In particular, in the embodiment, shapes of the uneven portions of the top plate 210 and the base plate 220 may not be symmetrical in the vertical direction but may be asymmetrical to each other.

According to the embodiment of the present disclosure, during dual cooling by the module case 200, a configuration for uniformly cooling the entire battery cell 110 may be more efficiently implemented. For example, the uneven portion may be uniformly formed over the base plate 220, to absorb and release heat from the cell assembly 100. Due to a cooling configuration of the base plate 220, a temperature of the battery cell 110 may be partially nonuniform, and the top plate 210 may have a configuration for solving the non-uniformity. In particular, when a temperature of the electrode lead 111 is higher than that of other portions as a result of cooling by the base plate 220, as shown in FIG. 8, the area of the uneven portion on an outer portion of the top plate 210 may be made greater. In this case, the top plate 210 may absorb more heat at a portion close to the electrode lead 111 than other portions. Accordingly, as a result of combined cooling of the base plate 220 and the top plate 210, a temperature of the entire battery cell 110 may be uniform.

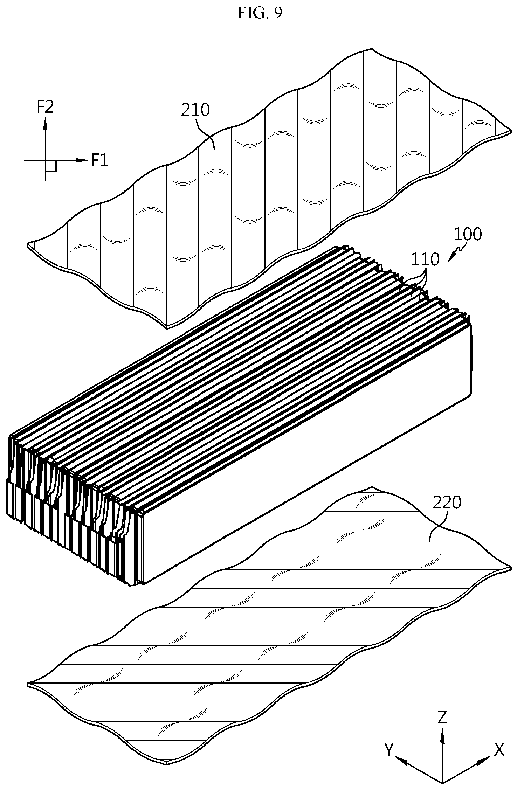

FIG. 9 is an exploded perspective view schematically illustrating some elements of a battery module according to still another embodiment of the present disclosure. In FIG. 9, for convenience of explanation, the side plate 230 is not shown.

Referring to FIG. 9, uneven portions may be formed on both the base plate 220 and the top plate 210, and directions of the uneven portions may be different from each other. That is, the uneven portion may be formed in a direction F1 on the top plate 210, and the uneven portion may be formed in a direction F2 on the base plate 220. In more detail, the uneven portion of the top plate 210 may be formed so that a convex portion and a concave portion are repeatedly alternately arranged in the direction F1. The uneven portion of the base plate 220 may be formed so that a convex portion and a concave portion are repeatedly alternately arranged in the direction F2. In particular, directions of the uneven portions of the top plate 210 and the base plate 220 may be perpendicular to each other.

According to this embodiment of the present disclosure, for the same cell assembly 100, an upper cooling type and a lower cooling type may be different from each other. In this case, uniform cooling performance of the cell assembly 100 may be more easily ensured. Furthermore, when the thermal resin 300 is filled in the uneven portions of the base plate 220 and the top plate 210, in one battery cell 110, the amount of resin contacting an upper portion and the amount of resin contacting a lower portion may be different from each other. Accordingly, in one battery cell 110, a problem in which cooling performance of a specific portion is degraded may be reduced. For example, according to the embodiment, in one battery cell 110, even when a convex portion may contact a lower side of a certain portion, and thus, the amount of contact resin is small, a concave portion may contact an upper side of the certain portion, and thus, the amount of contact resin may be large. Accordingly, the probability that the amount of contact resin is small on both the upper side and the lower side of the certain portion of one battery cell 110 may be reduced. Hence, in this case, for each battery cell 110, overall uniform cooling performance may be ensured.

Also, according to the embodiment, an upper heat dissipation type and a lower heat dissipation type of the cell assembly 100 may be different from each other. For example, in the embodiment of FIG. 9, a concave portion having a large contact surface area may be formed long in the direction F2 on the top plate 210, and a concave portion may be formed long in the direction F1 on the base plate 220. In this case, more heat discharge directions of the top plate 210 that are the same as the direction F2 may be formed, and more heat discharge directions of the base plate 220 that are the same as the direction F1 may be formed. Hence, because heat discharge types on an upper side and a lower side of the cell assembly 100 may be different from each other, concentration of heat in a specific direction of the battery module may be reduced. Accordingly, entire cooling efficiency of the entire battery module may be improved.

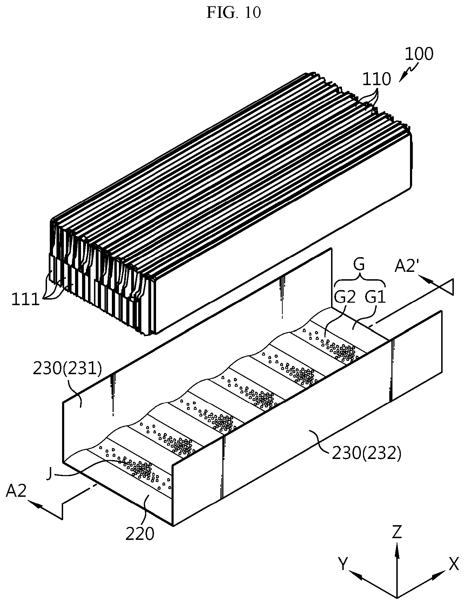

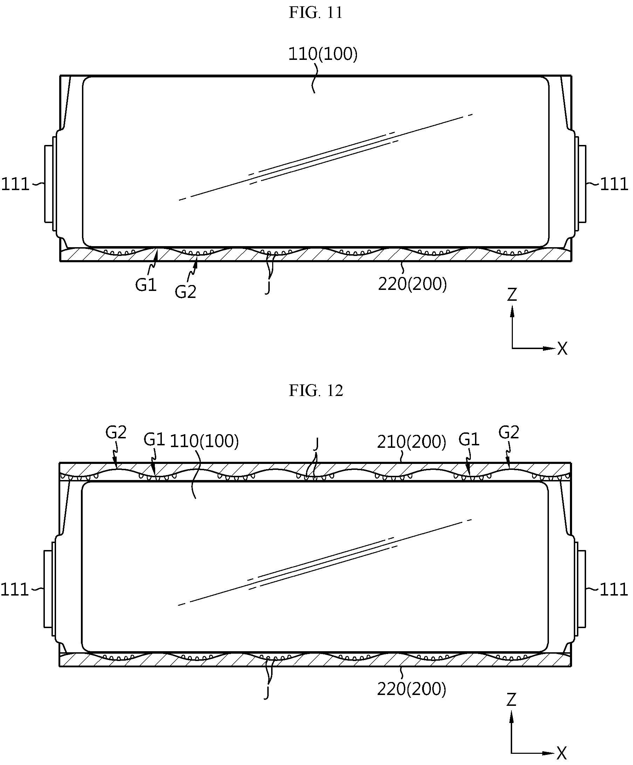

FIGS. 10 and 11 are an exploded perspective view and a cross-sectional view schematically illustrating some elements of a battery module according to still another embodiment of the present disclosure. In particular, FIG. 11 may be a cross-sectional view taken along line A2-A2' of a combined configuration of FIG. 10.

Referring to FIGS. 10 and 11, in the battery module according to the present disclosure, the module case 200 may include a fine protrusion J. The fine protrusion J may convexly protrude inward from an inner surface of the module case 200. In particular, the fine protrusion J may be formed on a portion of the module case 200 on which the uneven portion G is formed. For example, when the uneven portion G is formed on the base plate 220 of the module case 200, a plurality of fine protrusions J may be provided on an inner surface, that is, a top surface, of the base plate 220.

The plurality of fine protrusions J may be provided in the horizontal direction, that is, the left-right direction (Y-axis direction) and the front-back direction (X-axis direction) on the inner surface of the module case 200. In this case, a size of the fine protrusion J may be much smaller than a length of the module case 200. For example, the fine protrusion J may have a circular shape having a diameter and a height of about 1 mm to 50 mm or less.

According to the embodiment of the present disclosure, due to the fine protrusion J in addition to the uneven portion G, a contact area between the module case 200 and the cell assembly 100 may be further increased. Accordingly, heat transfer efficiency and speed from the cell assembly 100 to the module case 200 may increase, and thus, cooling efficiency of the battery module may be improved. Also, when the fine protrusion J is applied to an embodiment where the thermal resin 300 is located between the cell assembly 100 and the module case 200, movement of a large amount of the thermal resin 300 downward along an inclined surface of the module case 200 due to the uneven portion G may be suppressed. Accordingly, the thermal resin 300 may be uniformly located on the portion where the uneven portion G is formed.

As shown in FIGS. 10 and 11, the uneven portion G of the module case 200 may be formed so that a convex portion G1 and a concave portion G2 are alternately arranged. In this case, the fine protrusion J may be provided on the concave portion G2 of the uneven portion G of the module case 200. Furthermore, an end of the fine protrusion J located on the concave portion G2 may be located at a position lower than the convex portion G1. That is, a height of the fine protrusion J of the concave portion G2 may not be greater than a height of the convex portion G1.

According to this embodiment, the fine protrusion J located on the concave portion G2 may not directly contact the battery cell 100. Accordingly, when the battery cell 110 is seated on the inner surface of the module case 200, for example, the top surface of the base plate 220, interference with a seating process or damage to the battery cell 100 due to the fine protrusion J may be prevented.

Also, in the embodiment, a density of the fine protrusions J provided on a surface of the module case 200 may be partially different. A density may refer to the number or height of fine protrusions J with respect to the same surface area of the module case 200. In particular, a density of a plurality of fine protrusions J may be different in the stacking direction of the battery cells 110.

For example, as shown in FIG. 10, when a plurality of battery cells 110 are stacked in the left-right direction on the base plate 220, the number or shape of a plurality of fine protrusions J may vary in the left-right direction. In particular, on at least a part of the top surface of the base plate 220, a density of the fine protrusions J may increase toward a central portion in the stacking direction (Y-axis direction) of the battery cells 110. In other words, a density of the plurality of fine protrusions J may decrease outward in the stacking direction of the battery cells 110.

According to this embodiment of the present disclosure, in the configuration of the cell assembly 100 in which the plurality of battery cells 110 are stacked, cooling performance of the battery cells 110 located on a central portion may be improved. Accordingly, a problem in which a temperature of the battery cell 110 stacked at the center is higher than a temperature of the battery cell 110 stacked on an outer side may be prevented, thereby contributing to temperature uniformity of the cell assembly 100.

Although the fine protrusion J is provided on the base plate 220 in the embodiment of FIGS. 10 and 11, the fine protrusion J may also be provided on the top plate 210. When the fine protrusion J is provided on the top plate 210, the same description as that made for the fine protrusion J provided on the base plate 220 may be applied, which will be described in more detail with reference to an embodiment of FIG. 12.

FIG. 12 is a cross-sectional view schematically illustrating some elements of a battery module according to still another embodiment of the present disclosure.

Referring to FIG. 12, the fine protrusion J may be formed on the top plate 210 as well as the base plate 220. In particular, the fine protrusion J formed on the top plate 210 may have a different shape, size, or arrangement from the fine protrusion J formed on the base plate 220. For example, on the base plate 220, the fine protrusion J may be formed on the concave portion G2, and on the top plate 210, the fine protrusion J may be formed on the convex portion G1. The convex portion G1 of the top plate 210 may be a portion convexly formed downward, that is, toward the cell assembly 100, on a bottom surface of the top plate 210.

According to this embodiment of the present disclosure, a receiving configuration of the cell assembly 100 in the module case 200 may be more stable. Furthermore, the cell assembly 100 may directly contact a top surface of the base plate 220, and the fine protrusion J may be formed on the concave portion G2, and thus, a flat portion of the convex portion G1 may stably contact the bottom of the cell assembly 100. There may be a certain space between the bottom surface of the top plate 210 and the cell assembly 100 due to tolerance or the like. In this case, because the fine protrusion J is formed on the convex portion G1 close to the cell assembly 100, the fine protrusion J may be located close to or may directly contact the top of the cell assembly 100. Accordingly, a receiving state of the battery cells 110, in particular, a state in which the battery cells 110 are stacked in the left-right direction while erected in the vertical direction may be more stably maintained. In this case, heat transfer efficiency between the cell assembly 100 and the module case 200, in particular, the top plate 210, may be improved.

A battery pack according to the present disclosure may include one or more battery modules according to the present disclosure. Also, the battery pack according to the present disclosure may further include various elements other than the battery module, for example, elements of the battery pack known at the time of filing the present application such as a BMS or a bus bar, a pack case, a relay, and a current sensor.

The battery module according to the present disclosure may be applied to a vehicle such as an electric vehicle or a hybrid vehicle. That is, a vehicle according to the present disclosure may include a battery module according to the present disclosure or the battery pack according to the present disclosure. Also, the vehicle according to the present disclosure may include various other elements included in the vehicle in addition to the battery module or the battery pack. For example, the vehicle according to the present disclosure may further include a vehicle body, a motor, or a control device such as an electronic control unit (ECU) in addition to the battery module according to the present disclosure.

In particular, recently, the demand for fast charging technology for a vehicle driven by a motor has increased. In this situation, a vehicle employing the battery module according to the present disclosure may have excellent heat dissipation and cooling performance even during fast charging.

Also, the battery module according to the present disclosure may be applied to an energy storage system (ESS). That is, an ESS according to the present disclosure may include the battery module according to the present disclosure or the battery pack according to the present disclosure.

It will be understood by one of ordinary skill in the art that when terms indicating directions such as upper, lower, left, right, front, and rear are used, these terms are only for convenience of explanation and may vary according to a position of a target object, a position of an observer, etc.

### [Description of Reference Numerals]

100: cell assembly
110: battery cell
111: electrode lead
200: module case
210: top plate, 220: base plate, 230: side plate
231: left plate, 232: right plate, 233: front plate, 234: rear plate
300: thermal resin
G: uneven portion

## Claims

1. A battery module comprising:
a cell assembly (100) comprising a plurality of battery cells (110) stacked in at least one direction; and
a module case (200) having an inner space in which the cell assembly (100) is accommodated, the module case (200) comprising an uneven portion (G) formed on at least a part of an inner surface of the module case (200) in a direction not parallel to a stacking direction of the plurality of battery cells (110),
wherein the module case (200) comprises a top plate (210), a base plate (220), and a side plate (230), and the uneven portion (G) is formed on the base plate (220),
wherein the plurality of battery cells (110) are stacked in a left-right direction, and the uneven portion (G) of the module case (200) is formed in a front-back direction, the battery module being **characterised in that** the uneven portion (G) of the module case (200) is configured such that a convex portion and a concave portion are repeatedly arranged in the front-back direction.

2. The battery module according to claim 1, further comprising a thermal resin (300) located between the cell assembly (100) and the inner surface of the module case (200) on which the uneven portion (G) is formed.

3. The battery module according to claim 1, wherein the uneven portion (G) is additionally formed on at least one of the top plate (210) and the side plate (230).

4. The battery module according to claim 1, wherein the module case (200) further comprises an uneven portion (G) formed on at least a part of an outer surface.

5. The battery module according to claim 1, wherein the module case (200) is configured so that a surface area of the uneven portion (G) changes from an inside to an outside.

6. The battery module according to claim 1, wherein the module case (200) comprises an uneven portion (G) formed on each of a top plate (210) and a base plate (220), and the uneven portion (G) formed on the top plate (210) and the uneven portion (G) formed on the base plate (220) have different shapes.

7. A battery pack comprising the battery module according to any one of claims 1 to 6.

8. A vehicle comprising the battery module according to any one of claims 1 to 6.

## Patentansprüche

1. Batteriemodul aufweisend:
eine Zellenanordnung (100) aufweisend mehrere Batteriezellen (110), die in zumindest einer Richtung gestapelt sind; und
ein Modulgehäuse (200) mit einem Innenraum, in dem die Zellenanordnung (100) aufgenommen ist, wobei das Modulgehäuse (200) einen unebenen Abschnitt (G) aufweist, der auf zumindest einem Teil einer Innenfläche des Modulgehäuses (200) in einer Richtung ausgebildet ist, die nicht parallel zu einer Stapelrichtung der mehreren Batteriezellen (110) ist,
wobei das Modulgehäuse (200) eine obere Platte (210), eine Basisplatte (220) und eine Seitenplatte (230) aufweist, und der unebene Abschnitt (G) auf der Basisplatte (220) ausgebildet ist,
wobei die mehreren Batteriezellen (110) in einer Links-Rechts-Richtung gestapelt sind, und der unebene Abschnitt (G) des Modulgehäuses (200) in einer Vorn-Hinten-Richtung ausgebildet ist,
wobei das Batteriemodul **dadurch gekennzeichnet ist, dass** der unebene Abschnitt (G) des Modulgehäuses (200) so konfiguriert ist, dass ein konvexer Abschnitt und ein konkaver Abschnitt wiederholt in der Vorn-Hinten-Richtung gebildet sind.

2. Batteriemodul nach Anspruch 1, ferner aufweisend ein thermisches Harz (300), das zwischen der Zellenanordnung (100) und der Innenfläche des Modulgehäuses (200) angeordnet ist, auf der der unebene Abschnitt (G) ausgebildet ist.

3. Batteriemodul nach Anspruch 1, wobei der unebene Abschnitt (G) zusätzlich auf der oberen Platte (210) und/oder der Seitenplatte (230) ausgebildet ist.

4. Batteriemodul nach Anspruch 1, wobei das Modulgehäuse (200) ferner einen unebenen Abschnitt (G) aufweist, der auf zumindest einem Teil einer Außenfläche ausgebildet ist.

5. Batteriemodul nach Anspruch 1, wobei das Modulgehäuse (200) so konfiguriert ist, dass sich eine Oberfläche des unebenen Abschnitts (G) von innen nach außen ändert.

6. Batteriemodul nach Anspruch 1, wobei das Modulgehäuse (200) einen unebenen Abschnitt (G) aufweist, der jeweils auf einer oberen Platte (210) und einer Basisplatte (220) ausgebildet ist, und der unebene Abschnitt (G), der auf der oberen Platte (210) ausgebildet ist, und der unebene Abschnitt (G), der auf der Basisplatte (220) ausgebildet ist, unterschiedliche Formen aufweisen.

7. Batteriepack aufweisend das Batteriemodul nach einem der Ansprüche 1 bis 6.

8. Fahrzeug aufweisend das Batteriemodul nach einem der Ansprüche 1 bis 6.

## Revendications

1. Module de batterie comprenant :
un ensemble de cellules (100) comprenant une pluralité de cellules de batterie (110) empilées dans au moins une direction; et
un boîtier de module (200) possédant un espace intérieur dans lequel l'ensemble de cellules (100) est installé, le boîtier de module (200) comprenant une partie irrégulière (G) formée sur au moins une partie d'une surface intérieure du boîtier de module (200) dans une direction non parallèle à une direction d'empilement de la pluralité de cellules de batterie (110),
le boîtier de module (200) comprenant une plaque supérieure (210), une plaque de base (220) et une plaque latérale (230), et la partie irrégulière (G) est formée sur la plaque de base (220),
la pluralité de cellules de batterie (110) étant empilée dans le sens gauche-droite, et la partie irrégulière (G) du boîtier du module (200) étant formée dans le sens avant-arrière, le module de batterie étant **caractérisé en ce que**
la partie irrégulière (G) du boîtier de module (200) est configurée de sorte qu'une partie convexe et une partie concave soient agencées à plusieurs reprises dans le sens avant-arrière.

2. Module de batterie selon la revendication 1, comprenant en outre une résine thermique (300) située entre l'ensemble de cellules (100) et la surface intérieure du boîtier de module (200) sur laquelle la partie irrégulière (G) est formée.

3. Module de batterie selon la revendication 1, la partie irrégulière (G) étant formée en outre sur au moins une de la plaque supérieure (210) et de la plaque latérale (230).

4. Module de batterie selon la revendication 1, le boîtier de module (200) comprenant en outre une partie irrégulière (G) formée sur au moins une partie d'une surface extérieure.

5. Module de batterie selon la revendication 1, le boîtier de module (200) étant configuré de sorte qu'une surface de la partie irrégulière (G) passe d'un intérieur à un extérieur.

6. Module de batterie selon la revendication 1, le boîtier de module (200) comprenant une partie irrégulière (G) formée sur chacune d'une plaque supérieure (210) et d'une plaque de base (220), et la partie irrégulière (G) formée sur la plaque supérieure (210) et la partie irrégulière (G) formée sur la plaque de base (220) possédant des formes différentes.

7. Bloc-batterie comprenant le module de batterie selon une quelconque des revendications 1 à 6.

8. Véhicule comprenant le module de batterie selon une quelconque des revendications 1 à 6.
